# EUROPEAN PATENT SPECIFICATION

(11) **EP 1 591 733 B1**
(45) Date of publication and mention of the grant of the patent: **24.07.2013**
(21) Application number: 04101819.3
(22) Date of filing: 29.04.2004
(51) Int. Cl.: F25D 17/04

(54) **Food container having odour filtering means**
Lebensmittelbehälter mit Geruchsfilter
Récipient pour produits alimentaires contenant un filtre pour les odeurs

(43) Date of publication of application: 02.11.2005
(73) Proprietor: Electrolux Home Products Corporation N.V., 1130 Brussel (BE)
(72) Inventor: Santarossa, Angelo, 33080, Porcia (IT); Neves Barros, Alexandre, 33170, Pordenone (IT)
(74) Representative: Markovina, Paolo

(56) References cited:
- FR-A- 1 190 175
- NL-C- 28 420
- US-A- 2 898 174
- US-A- 3 467 458
- US-A- 4 867 512
- US-B1- 6 286 330
- PATENT ABSTRACTS OF JAPAN vol. 2003, no. 09, 3 September 2003 (2003-09-03) -& JP 2003 148861 A (MATSUSHITA REFRIG CO LTD), 21 May 2003 (2003-05-21)
- PATENT ABSTRACTS OF JAPAN vol. 1999, no. 12, 29 October 1999 (1999-10-29) -& JP 11 190584 A (SHARP CORP), 13 July 1999 (1999-07-13)
- PATENT ABSTRACTS OF JAPAN vol. 2000, no. 24, 11 May 2001 (2001-05-11) -& JP 2001 187125 A (SATO TOSHIYUKI; HANDA SHINYA), 10 July 2001 (2001-07-10)
- PATENT ABSTRACTS OF JAPAN vol. 014, no. 277 (M-0985), 15 June 1990 (1990-06-15) -& JP 02 082081 A (MATSUSHITA REFRIG CO LTD), 22 March 1990 (1990-03-22)

## Description

The present invention relates to a food container, particularly for storing food in a refrigerator, having odour filtering means to avoid the emission of odours when aromatic foods are placed therein.

It is commonly known that for prolonging the duration of perishable food is useful to preserve the food in a container preferably stored in a refrigerated chamber. If the container can efficiently maintain its contents separated by food of different kind, it is often quite difficult to prevent completely food odours from diffusing outside the container.

In a refrigerator, or in a similar confined environment, the presence of odours of various foods, such as onion, garlic, strong cheeses and the like, often fill the refrigerated area with strong and incompatible aromas, producing a bad olfactory sensation when the refrigerator is opened. In addition, if the container is provided with a plurality of compartments, and in particular if the compartments are in reciprocal communication, the aroma of one food can, by sharing its essence, disadvantageously diminish or even changing the character of another food contained in another compartment, see for example NL 28 420 C, US 4867 512 A.

It is therefore an object of the present invention to provide a food container able to prevent the build-up of odours in the environment where the container is placed.

It is another object of the invention to provide a multi-compartment food container preventing the sharing of different essences among various foods stored in the container.

Advantages, objects, and features of the invention will be set forth in part in the description which follows and in part will become apparent to those having ordinary skill in the art upon examination of the following or may be learned from practice of the invention. The objects and advantages of the invention may be realised and attained as particularly pointed out in the appended claims.

The accompanying drawings, which are included to provide a further understanding of the invention and are incorporated in and constitute a part of this specification, illustrate embodiments of the invention and together with the description serve to explain the principles of the invention.

In the drawings:

Figure 1 shows a food container according to the invention;

Figure 2 shows a second embodiment of the food container.

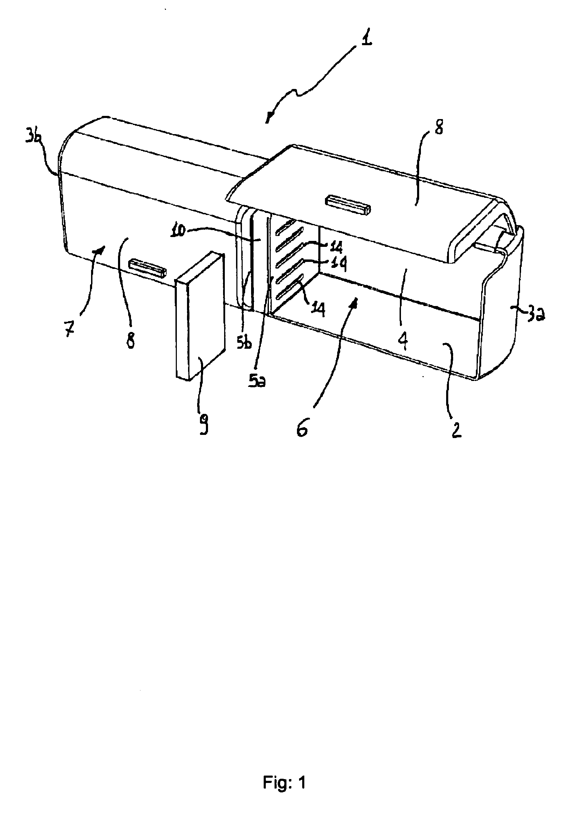

With reference to figure 1 the food container 1 comprises a bottom wall 2 from which lateral walls 3a and 3b and a rear wall 4 extend substantially in a vertical direction. Each lateral wall 3a, 3b forms an angle, preferably equal to 90°, with the rear wall 4 and with the bottom wall 2. Dividing walls 5a, 5b generally parallel and spaced apart from the lateral walls 3a, 3b allow the container 1 to be divided into two compartments 6 and 7. Each compartment 6, 7 is provided with a door 8 extending above the dividing walls 5a, 5b and the lateral walls 3a, 3b so as to form the ceiling of the single compartment. Each door 8 is pivotally mounted on the rear wall 4 to give access to the interior region of the compartment.

Naturally, more than two compartments can be provided in the food container 1 and said compartments 6, 7 can be defined not only by dividing walls 5a, 5b extending perpendicularly from the bottom wall 2 but also, if desired, by dividing walls parallel and spaced apart from the bottom wall 2.

Odour filtering means 9, preferably comprising an active carbon filter, is interposed between the compartments 6 and 7 and it is placed in a first housing 10 adapted to receive it. The first housing 10 provided in the container 1 can be defined by two spaced apart dividing walls 5a, 5b of two adjacent compartments or it can be simply defined, for example, by a guide. In both cases the filtering means 9 is removably associable to the container 1. In the solution using a guide, the filtering means 9 acts as dividing wall, dividing the food container 1 in two compartments 6 and 7 thereby avoiding the use of the dividing walls 5a, 5b. Naturally means other than a guide can be equivalently used to associate the filtering means 9 to the container 1 provided that such means allows the removal of the filtering means 9 for its periodical replacement.

If dividing walls 5a, 5b are used, they are provided with at least one first aperture 14 such that air can pass from one compartment to another through the odour filtering means 9 thereby avoiding any aromas mixture.

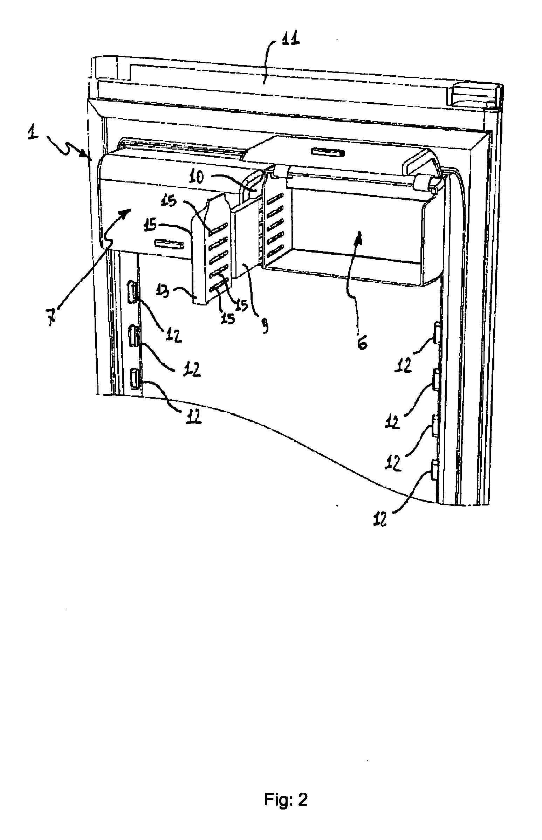

In figure 2 is shown a second embodiment of the food container 1 mounted on the inner side of a refrigerator door 11.

The container 1 is adapted to be removably associated to a refrigerator door 11, and preferably it can be placed in a plurality of positions defined by attaching means 12 provided on the door 11, as desired by the user.

According to the second embodiment of the present invention, the food container 1 comprises a second housing 13 adapted to receive the odour filtering means 9. Said second housing 13 is removably associable to the first housing 10 both if the latter is defined by two spaced apart dividing walls 5a, 5b both if it is in the form of a guide or other means that allows the removal of the filtering means 9 and of the second housing 13 from the container 1. The second housing 13 comprises preferably a box-like structure and, if the first housing 10 is defined by two spaced apart dividing walls 5a, 5b, the second housing 13 can be provided with one or more second apertures 15 disposed on the surfaces that interact with the dividing walls 5a, 5b. In this case when the second housing 13, carrying the filtering means 9, is associated to the first housing 10, said one or more second aperture 15 are preferably aligned with said at least one first aperture 14.

Naturally the reciprocal position of the first and the second apertures 15 can be also staggered to prolong the air stay within the filtering means 9.

Said filtering means 9 can be realised in more than one piece and the filter type can be the most appropriate according to the needs. If the container 1 has more than two compartments the appropriate number of filtering means 9 must be used.

Conclusively, it can therefore be stated that the food container according to the present invention can be advantageously used when different kinds of food having strong aromas must be stored for their conservation, avoiding odour mixture and also odour dispersion in the environment where the container is placed.

As the present invention may be embodied in several forms without departing from the scope or essential characteristics thereof, it should also be understood that the above-described embodiments are not limited by any of the details of the foregoing description, but rather should be construed broadly within its scope as defined in the appended claims, and therefore all changes and modifications that fall within the meets and bounds of the claims, or equivalence of such meets and bounds are therefore intended to be embraced by the appended claims.

## Claims

1. A food container (1) comprising a plurality of compartments (6, 7) and at least one odour filtering means (9), said odour filtering means (9) being interposed between at least two of said compartments (6, 7), **characterized in that** it further comprises a first housing (10) defined by two spaced apart dividing walls (5a, 5b) of two adjacent compartments (6, 7) and adapted to receive said at least one odour filtering means (9), and **in that** said at least one odour filtering means (9) is removably associable to the food container (1).

2. A food container (1) according to claim 1, wherein each dividing wall (5a, 5b) comprises at least one first aperture (14).

3. A food container (1) according to claim 1 or 2, further comprising a second housing (13) adapted to receive the odour filtering means (9), said second housing (13) being removably associable to said first housing (10).

4. A food container (1) according to claim 3, wherein said second housing (13) comprises a box-like structure having one or more second apertures (15).

5. A food container (1) according to claim 4, wherein said one or more second aperture (15) are aligned with said at least one first aperture (14) when the second housing (13) is associated to the first housing (10).

6. A food container (1) according to any preceding claim, wherein the odour filtering means (9) comprises an active carbon filter.

7. A food container (1) according to any preceding claim adapted to be removably associated to a refrigerator door (11).

8. A refrigerator comprising a food container (1) according to anyone of the preceding claims.

## Patentansprüche

1. Lebensmittelbehälter (1), umfassend eine Vielzahl von Abteilungen (6, 7) und mindestens ein Geruchsfiltermittel (9), wobei das Geruchsfiltermittel (9) zwischen mindestens zwei der Abteilungen (6, 7) angeordnet ist, **dadurch gekennzeichnet, dass** er ferner ein erstes Gehäuse (10) umfasst, das durch zwei voneinander beabstandete Trennwände (5a, 5b) zweier benachbarter Abteilungen (6, 7) definiert wird und das geeignet ist, das mindestens eine Geruchsfiltermittel (9) aufzunehmen, und dass das mindestens eine Geruchsfiltermittel (9) auf abnehmbare Weise mit dem Lebensmittelbehälter (1) verbunden werden kann.

2. Lebensmittelbehälter (1) nach Anspruch 1, wobei jede Trennwand (5a, 5b) mindestens eine erste Öffnung (14) umfasst.

3. Lebensmittelbehälter (1) nach Anspruch 1 oder 2, ferner umfassend ein zweites Gehäuse (13), das geeignet ist, das Geruchsfiltermittel (9) aufzunehmen, wobei das zweite Gehäuse (13) auf abnehmbare Weise mit dem ersten Gehäuse (10) verbunden werden kann.

4. Lebensmittelbehälter (1) nach Anspruch 3, wobei das zweite Gehäuse (13) eine schachtelförmige Struktur mit einer oder mehreren zweiten Öffnungen (15) umfasst.

5. Lebensmittelbehälter (1) nach Anspruch 4, wobei die eine oder mehreren zweiten Öffnungen (15) auf die mindestens eine erste Öffnung (14) ausgerichtet sind, wenn das zweite Gehäuse (13) mit dem ersten Gehäuse (10) verbunden ist.

6. Lebensmittelbehälter (1) nach einem der vorhergehenden Ansprüche, wobei das Geruchsfiltermittel (9) einen Aktivkohlefilter umfasst.

7. Lebensmittelbehälter (1) nach einem der vorhergehenden Ansprüche, wobei er geeignet ist, auf abnehmbare Weise mit einer Kühlschranktür (11) verbunden zu werden.

8. Kühlschrank, umfassend einen Lebensmittelbehälter (1) nach einem der vorhergehenden Ansprüche.

## Revendications

1. Récipient pour produits alimentaires (1) comprenant une pluralité de compartiments (6, 7) et au moins un moyen formant filtre pour les odeurs (9), ledit moyen formant filtre pour les odeurs (9) étant intercalé entre au moins deux desdits compartiments (6, 7), **caractérisé en ce qu'**il comprend un premier boîtier (10) défini par deux parois de division (5a, 5b) espacées de deux compartiments (6, 7) adjacents, et adapté pour recevoir ledit au moins un moyen formant filtre pour les odeurs (9), et **en ce que** ledit au moins un moyen formant filtre pour les odeurs (9) peut être associé de manière amovible au récipient pour produits alimentaires (1).

2. Récipient pour produits alimentaires (1) selon la revendication 1, dans lequel chaque paroi de division (5a, 5b) comprend au moins une première ouverture (14).

3. Récipient pour produits alimentaires (1) selon la revendication 1 ou 2, comprenant en outre un second boîtier (13) adapté pour recevoir le moyen formant filtre pour les odeurs (9), ledit second boîtier (13) qui peut être associé de manière amovible audit premier boîtier (10).

4. Récipient pour produits alimentaires (1) selon la revendication 3, dans lequel ledit second boîtier (13) comprend une structure en forme de boîte ayant une ou plusieurs secondes ouvertures (15).

5. Récipient pour produits alimentaires (1) selon la revendication 4, dans lequel lesdites une ou plusieurs secondes ouvertures (15) sont alignées avec ladite au moins une première ouverture (14) lorsque le second boîtier (13) est associé au premier boîtier (10).

6. Récipient pour produits alimentaires (1) selon l'une quelconque des revendications précédentes, dans lequel le moyen formant filtre pour les odeurs (9) comprend un filtre à charbon actif.

7. Récipient pour produits alimentaires (1) selon l'une quelconque des revendications précédentes, adapté pour être associé de manière amovible à une porte de réfrigérateur (11).

8. Réfrigérateur comprenant un récipient pour produits alimentaires (1) selon l'une quelconque des revendications précédentes.
